# EUROPÄISCHE PATENTSCHRIFT

(11) **EP 0 373 334 B1**
(45) Veröffentlichungstag und Bekanntmachung des Hinweises auf die Patenterteilung: **21.12.1994**
(21) Anmeldenummer: 89120084.2
(22) Anmeldetag: 30.10.1989
(51) Int. Cl.: B60T 7/20, G01L 1/20, B60D 1/50

(54) **Einrichtung zur Erfassung einer Axialkraft einer Deichselkupplung**
Measurement device for the axial force of a drawbar coupling
Dispositif d'évaluation de force axiale pour un accouplement à timon

(30) Priorität: 14.12.1988 DE 3842037
(43) Veröffentlichungstag der Anmeldung: 20.06.1990
(73) Patentinhaber: WABCO GmbH, 30453 Hannover (DE)
(72) Erfinder: Christoffers, Bernd, D-3015 Wennigsen (DE); Feldmann, Joachim, D-3057 Neustadt 2 (DE); Schult, Manfred, Dr., D-3008 Garbsen 8 (DE)
(74) Vertreter: Schrödter, Manfred, Dipl.-Ing.

(56) Entgegenhaltungen:
- EP-A- 0 145 001
- WO-A-86/02323
- WO-A-87/05571
- CH-A- 583 110
- DE-A- 2 752 641

## Beschreibung

Die Erfindung betrifft eine Einrichtung zur Erfassung einer Axialkraft gemäß dem Oberbegriff der Patentansprüche 1 bis 3.

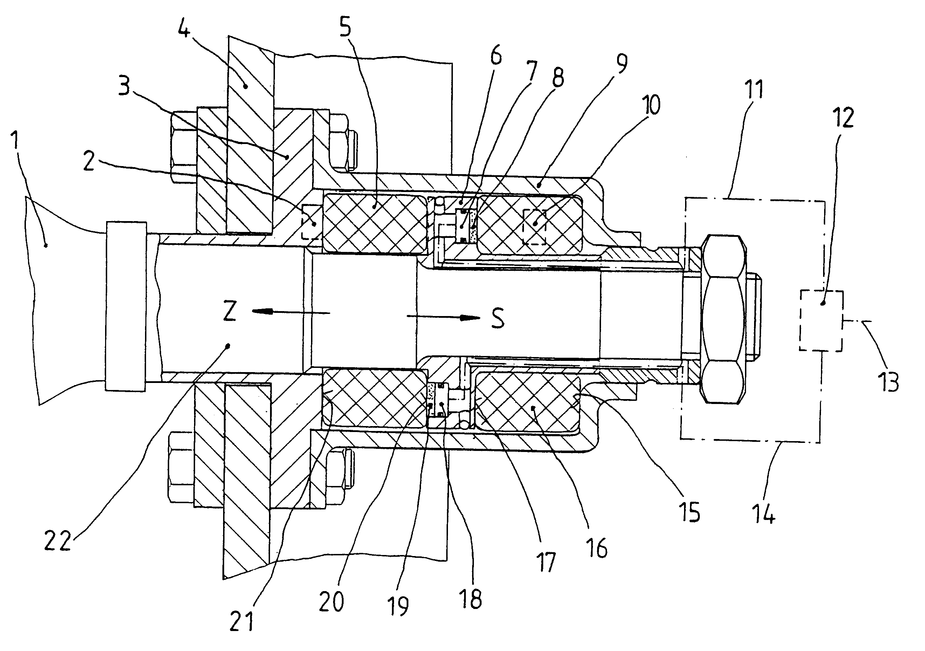

Eine Einrichtung zur Erfassung einer Axialkraft einer Deichselkupplung ist aus der WO 86/02323, dort insbesondere Fig.3, bekannt. In dieser wird ein elektrischer Kontakt geschlossen, wenn das Elastomer-Federelement unter der Einwirkung der Axialkraft um ein vorbestimmtes Maß oder mehr eingefedert ist. Die bekannte Einrichtung zeigt also nur an, daß überhaupt eine Axialkraft vorhanden ist und daß diese eine vorbestimmte Größe erreicht oder überschritten hat.

Eine derartige Einrichtung ist für Einsatzfälle, in denen auf die Größe der auftretenden Axialkraft angepaßt reagiert werden soll, nicht geeignet.

Eine Einrichtung der eingangs genannten Art ist aus der WO-A-87/05571 bekannt. Diese setzt einen Kraftsensor ein, der zwischen einer auf die Zugstange aufgeschraubten Mutter und einem Elastomer-Federelement angeordnet ist. Zwischen dem Kraftsensor und dem Elastomer-Federelement ist noch eine metallische lose Zwischenscheibe vorgesehen. Die Mutter überträgt die Axialkraft (Zugkraft) über eine der Zugstange zuzurechnende Übertragungsschulter auf den Kraftsensor, der sie seinerseits über die Zwischenplatte auf das Elastomer-Federelement überträgt. Der Kraftsensor liegt bei dieser Einrichtung im vollen Kraftfluß der Axialkraft und muß ausreichend bemessen sein, dieser Belastung standzuhalten. Derart robuste Kraftsensoren sind aufwendig.

Aus der EP-A-0 145 001 ist eine Kraftmeßeinrichtung bekannt, die vorsieht, zwischen zwei die Kraft aufnehmenden Bauteilen einen Spalt anzuordnen, den Spalt mit einem elastomeren Stoff auszugießen und in den elastomeren Stoff vollständig oder teilweise einen Drucksensor einzubetten. Die zu messende Kraft wird in Druck in dem elastomeren Stoff umgesetzt, welchen der Drucksensor mißt.

Der Erfindung liegt die Aufgabe zugrunde, eine Einrichtung der eingangs genannten Art mit einfachen Mitteln so fortzubilden, daß sie mit geringem Aufwand ausführbar ist.

Diese Aufgabe wird durch die in den Patentansprüchen 1 - 3 angegebene Erfindung gelöst. Vorteilhafte Fortbildungen und Ausgestaltungen der Erfindung sind in den Unteransprüchen angegeben.

Der von der Erfindung vorgesehene wenigstens eine Drucksensor liegt überhaupt nicht im Kraftfluß oder nimmt nur einen geringen Teil desselben auf. Die Erfindung ermöglicht deshalb die Verwendung marktüblicher und kostengünstiger Bauelemente.

In der bekannten Einrichtung nach der WO-A 87/05571 vergrößert der Kraftsensor durch seine Anordnung in Reihe mit der Mutter und dem Elastomer-Federelement die Einbaulänge der Deichselkupplung. Demgegenüber ermöglicht die Erfindung die Anordnung des wenigstens einen Drucksensors so, daß dieser keinen zusätzlichen Bedarf an Einbaulänge der Deichselkupplung hervorruft.

Aus der DE 27 52 641 A1 ist es bekannt, an einer Deichselkupplung mit einem mechanischem Federelement Signale für unterschiedliche Größen einer Axialkraft mittels eines mehrstufigen Schalters zu gewinnen, dessen Schaltstufen bei zunehmender Einfederung des mechanischen Federelements nacheinander betätigt werden. Diese Schrift könnte den Einsatz eines mehrstufigen Schalters auch in Verbindung mit einem Elastomer-Federelement, wie es vorliegend gattungsbildend ist, nahelegen. In Fortbildung einer solchen Lösung könnte der mehrstufige Schalter durch einen Wegsensor ersetzt werden. Ein Elastomer-Federelement hat nun die Eigenschaft, daß es mit zunehmender Belastung ein progressives Einfederungsverhalten zeigt. Die Lösungen mit dem mehrstufigen Schalter bzw. dem Wegsensor weisen deshalb in Verbindung mit einem derartigen Federelement die Nachteile auf, daß sie bei größerer Axialkraft an Auflösungsvermögen und an Genauigkeit verlieren. Auch ist der nichtlineare Verlauf der von ihnen gelieferten Signale nachteilig. Die Erfindung wirkt hingegen unabhängig von der Einfederungs-Belastungs-Charakteristik des Elastomer-Federelements und gewährleistet deshalb stets einen linearen Signalverlauf mit wenigstens gleichbleibenden Auflösungsvermögen und wenigstens gleichbleibender Genauigkeit. Als weiteren Vorteil ihrer Unabhängigkeit von der Einfederungs-Belastungs-Charakteristik des Elastomer-Federelements bietet die Erfindung eine erhebliche Verringerung der Hysterese der von ihr gelieferten Signale.

Je nach der Art der Auswertung der von ihr gelieferten Signale kann die Erfindung zur Messung der Axialkraft und/oder zu von der Axialkraft abhängigen Steuerungs- bzw. Regelungszwecken, z.B. für eine deichselkraftabhängige Bremsdrucksteuerung, eingesetzt werden.

Der Einsatzbereich der Erfindung kann durch eine Fortbildung erweitert werden, in der sie außer der Axialkraft auch eine Axialkraft in Gegenrichtung erfaßt. In dieser Ausgestaltung können, wie in Patentanspruch 8 angegeben, durch Summierung der Signale der jeder Richtung zugeordneten Drucksensoren ein resultierendes Signal gebildet und zur Messung und/oder zu den oben genannten Zwecken ausgewertet werden. Dadurch können Störeinflüsse, die auf der Temperaturabhängigkeit des Verhaltens des Elastomers und auf dessen Zeitverhalten (Setzerscheinungen) beruhen, kompensiert werden. Ein derartiger Störeinfluß ist insbesondere die Nullpunktverschiebung.

Weitere Vorteile der Erfindung werden in deren nunmehr folgender Erläuterung anhand eines zeichnerisch dargestellten Ausführungsbeispiels beschrieben.

Die Figur zeigt eine Deichselkupplung, wie sie in der Fahrzeugtechnik zur Verbindung zweier Fahrzeuge gebräuchlich ist.

Im Fahrbetrieb hat die Deichselkupplung eine Axialkraft, die über ein nur teilweise dargestelltes Kupplungsmaul (1) von dem einen Fahrzeug in sie eingeleitet wird, auf das andere Fahrzeug zu übertragen. Letzteres Fahrzeug wird in der Zeichnung durch eine Rahmentraverse (4) und Lagerteile (3, 9) repräsentiert. Die im Zusammenhang mit der Erfindung funktionsmäßig dem Fahrzeug zuzuordnenden Lagerteile (3, 9) bilden ein Gehäuse für einige Bauteile des Ausführungsbeispiels, worauf weiter unten näher eingegangen wird.

Die Deichselkupplung enthält außer dem Zugmaul (1) eine mit diesem verbundene Zugstange (6, 22) und Elastomer-Federelemente (5, 16). Letztere können jeweils einteilig oder zusammengesetzt sein. An einer flanschartigen Ausbildung (6) der Zugstange (6, 22) sind zwei entgegengesetzt gerichtete Übertragungsschultern (17, 20) angeordnet. Aus hier nicht interessierenden Gründen ist die flanschartige Ausbildung (6) als selbständiges Bauteil hergestellt und in üblicher und daher nicht näher beschriebener Weise mit dem Rest (22) der Zugstange (6, 22) verbunden. Die von der Deichselkupplung zu übertragende Axialkraft kann eine Zugkraft in Richtung des Pfeils (Z) oder eine Schiebekraft in Richtung des Pfeils (S) sein.

Tritt eine Zugkraft auf, so wird diese über die Übertragungsschulter (20) der Zugstange (6, 22) auf das zugeordnete Elastomer-Federelement (5) und von diesem auf eine Übertragungsschulter (21) des Fahrzeugs, die an dem einen Lagerteil (3) angeordnet ist, übertragen. Die Zugkraft wird dabei in dem Elastomer-Federelement (5) in einen Druck umgesetzt, der der Flächenpressung zwischen der Übertragungsschulter (20) und dem Elastomer-Federelement (5) entspricht.

Das Ausführungsbeispiel enthält außerdem eine Einrichtung zur Erfassung der Axialkraft, nachstehend Kraftmeßeinrichtung genannt. Zu diesem Zweck ist in der Übertragungsschulter (20) ein Drucksensor (18) versenkt angeordnet. In dem Raum zwischen dem Drucksensor (18) und dem Elastomer-Federelement (5), genauer: dessen der Übertragungsschulter (20) zugeordneter Oberfläche, ist ein Druckübertrager (19) angeordnet, der aus einem Elastomer besteht, welches im Vergleich zum Werkstoff des Elastomer-Federelements (5) so weich ist, daß es den in diesem herrschenden Druck unverfälscht oder annähernd unverfälscht auf den Drucksensor (18) überträgt. Der Drucksensor (18) ist auf diese Weise dem von der Zugkraft in dem Elastomer-Federelement (5) hervorgerufenen Druck ausgesetzt und gibt über eine oder mehrere elektrische Leitungen (14) ein diesem Druck entsprechendes Signal ab. Da der Druck in dem Elastomer-Federelement (5) proportional der Zugkraft ist, kann das Signal des Drucksensors (18) als Kraftsignal ausgewertet und bezeichnet werden.

Wird das Ausführungsbeispiel, statt mit der Zugkraft, mit der Schiebekraft beaufschlagt, so wirkt das Ausführungsbeispiel wie soeben beschrieben, wobei die Übertragungsschulter (17) der Zugstange (6, 22), das Elastomer-Federelement (16), eine Übertragungsschulter (15) des Fahrzeugs, an dem anderen Lagerteil (9) angeordnet, ein Drucksensor (7) mit seiner elektrischen Leitung (11) und ein Druckübertrager (8) an die Stellen der soeben erwähnten entsprechenden Bauteile treten.

Die Kraftmeßeinrichtung, wie dargestellt, erfaßt sowohl die Zugkraft als auch die Schiebekraft. Sie kann aber auch durch Weglassen des entsprechenden Drucksensors (18 bzw. 7) und/oder des ensprechenden Elastomer-Federelements (5 bzw. 16) und/oder, gegebenenfalls, weiterer Bauteile nur die Zugkraft oder nur die Schiebekraft erfassend ausgebildet sein.

Es ist üblich, das jeweils vorhandene Elastomer-Federelement (5 bzw. 16) bzw. die Elastomer-Federelemente (5, 16) unter Vorspannung einzubauen. Damit wird die Entstehung von Kraftspitzen (Schlägen) vermieden, die Bauteile der Deichselkupplung und/oder der Kraftmeßeinrichtung und/oder des Fahrzeugs gefährden könnten. Soll in einem solchen Fall die Axialkraft nur in einer Richtung (Z oder S) erfaßt werden, so muß der zugeordnete Drucksensor (18 bzw. 7) in der nachgeschalteten Auswerteeinrichtung auf Null abgeglichen werden. Ist in einem solchen Fall die Erfassung der Axialkraft in beiden Richtungen (Z bzw. S) vorgesehen, wie dargestellt, so ist ein Nullabgleich der beiden Richtungen zugeordneten Drucksensoren (18 bzw. 7) jeweils für sich kaum möglich, da durch unterschiedliches Setzverhalten und/oder ungleiche Temperaturen der Elastomer-Federelemente (5, 16) eine Nullpunktabdrift stattfinden würde. Insoweit wirkt sich insbesondere aus, daß eine Deichselkupplung überwiegend Zugkraft zu übertragen hat, wodurch das dieser zugeordnete Elastomer-Federelement (5) durchschnittlich erheblich stärker belastet wird als das der Schiebekraft zugeordnete Elastomer-Federelement (16). Dies hat ein stark unterschiedliches Setzverhalten beider Elastomer-Federelemente (5, 16) mit entsprechend starker Nullpunktabdrift der Drucksensoren (18, 7) zur Folge.

Das Ausführungsbeispiel zeigt noch eine Fortbildung, die der Kompensation der soeben erwähnten Störeinflüsse dient. Dabei handelt es sich um eine Summiereinrichtung (12), der über die jeweiligen Leitungen (11 bzw. 14) das Signal des einen Drucksensors (18 bzw. 7) als + Signal und das Signal des anderen Drucksensors (7 bzw. 18) als - Signal zugeführt werden und die so ausgebildet ist, daß sie durch Summierung dieser Signale ein die resultierende Axialkraft nach Betrag und Richtung kennzeichnendes Signal an einem durch (13) angedeuteten Ausgang abgibt. Infolge der Summierung der von den Drucksensoren (18 bzw. 7) gelieferten Signale gibt die Summiereinrichtung (12) ein von Störeinflüssen nicht verfälschtes Signal ab, welches als Kraftsignal in der oben beschriebenen Weise verwendet werden kann.

Die Drucksensoren können, statt wie dargestellt versenkt, auch auf jede andere geeignete Weise an der jeweiligen Übertragungsschulter (17 bzw. 20) an der Zugstange (6, 22) angeordnet sein. Es können auch mehrere Drucksensoren auf der jeweiligen Übertragungsschulter (17 bzw. 20) verteilt angeordnet sein. Die Druckübertrager (7, 19) füllen im Ausführungsbeispiel den ihnen zugewiesenen Raum ganz aus; sie können aber auch diesen Raum nur teilweise ausfüllend angeordnet sein, sofern sie die ihm zukommende Funktion erfüllen.

Jeder Drucksensor kann unabhängig von dem bzw. den anderen statt an einer Übertragungsschulter (17 bzw. 20) der Zugstange (6, 22), auch an einer dem jeweiligen Elastomer-Federelement (5 bzw. 16) zugewandten Übertragungsschulter des Fahrzeugs angeordnet sein. Derartige Übertragungsschultern (21 bzw. 15) zeigt das Ausführungsbeispiel an dem einen Lagerteil (3) bzw. an dem anderen Lagerteil (9). Die Lage eines Drucksensors in dieser Ausgestaltung ist im Ausführungsbeispiel beispielhaft gestrichelt mit dem Bezugszeichen (2) angedeutet.

Jeder Drucksensor kann unabhängig von dem bzw. den anderen auch in dem jeweils zugeordneten Elastomer-Federelement (5 bzw. 16) angeordnet, beispielsweise eingegossen, sein. Eine solche Lage eines Drucksensors ist im Ausführungsbeispiel beispielhaft gestrichelt mit den Bezugszeichen (10) angedeutet.

Es liegt auf der Hand, daß für die soeben genannten Anordnungen der Drucksensoren alle zu deren Anordnung an den Übertragungsschultern (17 bzw. 20) der Zugstange (6, 22) gemachten Ausführungen in entsprechender Anwendung mitgelten. Allerdings stellt die Anordnung der Drucksensoren (7 bzw. 18) jeweils an der Übertragungsschulter (17 bzw. 20) der Zugstange (6, 22) eine bevorzugte Ausführungsform dar, weil dabei die jeweilige Axialkraft so dicht wie möglich an der Krafteinleitungsstelle erfaßt wird und damit ein etwa auftretender Störeinfluß durch Reibung der Elastomer-Federelemente (5, 16) in einem Gehäuse (zweites Lagerteil 9) oder auf der Zugstange (6, 22) ausgeschaltet wird.

In allen erwähnten Ausführungsformen sind die Drucksensoren (2, 7, 10, 18) und die Elastomer-Federelemente (5, 16) in einem von den Lagerteilen (3, 9) gebildeten Gehäuse angeordnet und damit vor Umgebungseinflüssen wie Verschmutzung und Feuchtigkeit geschützt. Außerdem erlaubt das Gehäuse, die Deichselkupplung und die beschriebene Einrichtung zur Erfassung der von dieser übertragenen Axialkraft als selbständige Baugruppe zu fertigen, einzustellen, abzugleichen, zu lagern und zu montieren.

Der Fachmann erkennt, daß sich der Schutzbereich der Erfindung nicht auf das Ausführungsbeispiel beschränkt, sondern vielmehr alle Ausgestaltungen erfaßt, deren Merkmale in den Patentansprüchen hervorgehoben sind.

## Patentansprüche

1. Einrichtung zur Erfassung einer Axialkraft, die von einer Deichselkupplung mittels einer Übertragungsschulter (20 bzw 17) einer der Deichselkupplung zugehörigen Zugstange (6, 22) in einer Richtung (Z bzw. S) über wenigstens ein Elastomer-Federelement (5 bzw. 16) auf ein Fahrzeug (Rahmentraverse 4, Lagerteile 3, 9) übertragen wird,
dadurch gekennzeichnet,
daß an der dem Elastomer-Federelement (5 bzw. 16) zugewandten Übertragungsschulter (20 bzw. 17) der Zugstange (6, 22) wenigstens ein dem von der Axialkraft in dem Elastomer-Federelement (5 bzw. 16) hervorgerufenen Druck ausgesetzter Drucksensor (18 bzw. 7) angeordnet ist.

2. Einrichtung zur Erfassung einer Axialkraft, die von einer Deichselkupplung mittels einer Übertragungsschulter (20 bzw 17) einer der Deichselkupplung zugehörigen Zugstange (6, 22) in einer Richtung (Z bzw. S) über wenigstens ein Elastomer-Federelement (5 bzw. 16) auf ein Fahrzeug (Rahmentraverse 4, Lagerteile 3, 9) übertragen wird,
dadurch gekennzeichnet,
daß an einer dem Elastomer-Federelement (5 bzw. 16) zugewandten Übertragungsschulter (21 bzw. 15) des Fahrzeugs (Rahmentraverse 4, Lagerteile 3, 9) wenigstens ein dem von der Axialkraft in dem Elastomer-Federelement (5 bzw. 16) hervorgerufenen Druck ausgesetzter Drucksensor (2) angeordnet ist.

3. Einrichtung zur Erfassung einer Axialkraft, die von einer Deichselkupplung mittels einer Übertragungsschulter (20 bzw 17) einer der Deichselkupplung zugehörigen Zugstange (6, 22) in einer Richtung (Z bzw. S) über wenigstens ein Elastomer-Federelement (5 bzw. 16) auf ein Fahrzeug (Rahmentraverse 4, Lagerteile 3, 9) übertragen wird,
dadurch gekennzeichnet,
daß in dem Elastomer-Federelement (5 bzw. 16) wenigstens ein dem von der Axialkraft in dem Elastomer-Federelement (5 bzw. 16) hervorgerufenen Druck ausgesetzter Drucksensor (10) angeordnet ist.

4. Einrichtung nach einem der vorhergehenden Ansprüche, worin von der Deichselkupplung eine Axialkraft in Gegenrichtung (S bzw. Z) über wenigstens ein weiteres Elastomer-Federelement (16 bzw. 5) auf das Fahrgestell (Rahmentraverse 4, Lagerteile 3, 9) übertragen wird,
dadurch gekennzeichnet,
daß an einer dem weiteren Elastomer-Federelement (16 bzw. 5) zugewandten Übertragungsschulter (17 bzw. 20) der Zugstange (6, 22) wenigstens ein dem von der Axialkraft in Gegenrichtung (S bzw. Z) in dem weiteren Elastomer-Federelement (16 bzw. 5) hervorgerufenen Druck ausgesetzter Drucksensor (7 bzw. 18) angeordnet ist.

5. Einrichtung nach einem der vorhergehenden Ansprüche, worin von der Deichselkupplung eine Axialkraft in Gegenrichtung (Z bzw. S) über wenigstens ein weiteres Elastomer-Federelement (16 bzw. 5) auf das Fahrgestell (Rahmentraverse 4, Lagerteile 3, 9) übertragen wird,
dadurch gekennzeichnet,
daß an einer dem weiteren Elastomer-Federelement (16 bzw. 5) zugewandten Übertragungsschulter (15 bzw. 21) des Fahrzeugs (Rahmentraverse 4, Lagerteile 3, 9) wenigstens ein dem von der Axialkraft in Gegenrichtung (S bzw. Z) in dem weiteren Elastomer-Federelement (16 bzw. 5) hervorgerufenen Druck ausgesetzter Drucksensor (2) angeordnet ist.

6. Einrichtung nach einem der vorhergehenden Ansprüche, worin von der Deichselkupplung eine Axialkraft in Gegenrichtung (S bzw. Z) über wenigstens ein weiteres Elastomer-Federelement (16 bzw. 5) auf das Fahrgestell (Rahmentraverse 4, Lagerteile 3, 9) übertragen wird,
dadurch gekennzeichnet,
daß in dem weiteren Elastomer-Federelement (16 bzw. 5) wenigstens ein dem von der Axialkraft in Gegenrichtung (S bzw. Z) in dem weiteren Elastomer-Federelement (16 bzw. 5) hervorgerufenen Druck ausgesetzter Drucksensor (10) angeordnet ist.

7. Einrichtung nach einem der vorhergehenden Ansprüche, dadurch gekennzeichnet,
daß der Drucksensor (7 bzw. 18; 2) in der zugehörigen Übertragungsschulter (17 bzw. 20; 15 bzw. 21) versenkt angeordnet ist und daß in dem Raum zwischen dem Drucksensor (7 bzw. 18; 2) und dem zugeordneten Elastomer-Federelement (16 bzw. 5) ein Druckübertrager (8 bzw. 19) aus einem im Vergleich zum zugeordneten Elastomer-Federelement (16 bzw. 5) weicheren Elastomer angeordnet ist.

8. Einrichtung nach einem der Ansprüche 4 bis 7,
dadurch gekennzeichnet,
daß eine Summiereinrichtung (12) vorgesehen ist, der das Signal des einen Drucksensors (7 bzw. 18; 2; 10) als + Signal und das Signal des anderen Drucksensors (18 bzw. 7; 2; 10) als - Signal zugeführt werden und die durch Summierung dieser Signale ein die resultierende Axialkraft nach Betrag und Richtung kennzeichnendes Signal bildet.

## Claims

1. A device for detecting an axial force which is transmitted by a draw-bar coupling by means of a transfer shoulder (20, 17) of a draw-bar (6, 22) which is part of the draw-bar coupling in a direction (Z or S) through at least one elastomeric spring element (5, 16) to a vehicle (frame cross-piece 4, bearing parts 3, 9), characterized in that at least one pressure sensor (18, 7) exposed to the pressure caused by the axial force in the elastomeric spring element (5, 16) is arranged on the transfer shoulder (20, 17) of the draw-bar (6, 22) facing the elastomeric spring element (5, 16).

2. A device for detecting an axial force which is transmitted by a draw-bar coupling by means of a transfer shoulder (20, 17) of a draw-bar (6, 22) which is part of the draw-bar coupling in a direction (Z or S) through at least one elastomeric spring element (5, 16) to a vehicle (frame cross-piece 4, bearing parts 3, 9), characterized in that at least one pressure sensor (2) exposed to the pressure caused by the axial force in the elastomeric spring element (5, 16) is arranged on a transfer shoulder (21, 15) of the vehicle (frame cross-piece 4, bearing parts 3, 9) facing the elastomeric spring element (5, 16).

3. A device for detecting an axial force which is transmitted by a draw-bar coupling by means of a transfer shoulder (20, 17) of a draw-bar (6, 22) which is part of the draw-bar coupling in a direction (Z or S) through at least one elastomeric spring element (5, 16) to a vehicle (frame cross-piece 4, bearing parts 3, 9), characterized in that at least one pressure sensor (10) exposed to the pressure caused by the axial force in the elastomeric spring element (5, 16) is arranged in the elastomeric spring element (5, 16).

4. A device according to one of the preceding claims, in which an axial force in an opposite direction (S or Z) is transmitted by the draw-bar coupling through at least one further elastomeric spring element (16, 5) to the vehicle chassis (frame cross-piece 4, bearing parts 3, 9), characterized in that at least one pressure sensor (7, 18) exposed to the pressure caused by the axial force in the opposite direction (S or Z) in the further elastomeric spring element (16, 5) is arranged on a transfer shoulder (17, 20) facing the further elastomeric spring element (16, 5).

5. A device according to one of the preceding claims, in which an axial force in an opposite direction (Z or S) is transmitted by the draw-bar coupling through at least one further elastomeric spring element (16, 5) to the vehicle chassis (frame cross-piece 4, bearing parts 3, 9), characterized in that at least one pressure sensor (2) exposed to the pressure caused by the axial force in the opposite direction (S or Z) in the further elastomeric spring element (16, 5) is arranged on a transfer shoulder (15, 21) of the vehicle (frame cross-piece 4, bearing parts 3, 9) facing the further elastomeric spring element (16, 5).

6. A device according to one of the preceding claims, in which an axial force in an opposite direction (S or Z) is transmitted by the draw-bar coupling through at least one further elastomeric spring element (16, 5) to the vehicle chassis (frame cross-piece 4, bearing parts 3, 9), characterized in that at least one pressure sensor (10) exposed to the pressure caused by the axial force in the opposite direction (S or Z) in the further elastomeric spring element (16, 5) is arranged in the further elastomeric spring element (16, 5).

7. A device according to one of the preceding claims, characterized in that the pressure sensor (7, 18; 2) is recessed in the associated transfer shoulder (17, 20; 15, 21) and a pressure transmitter (8, 19) made of an elastomer that is softer than the associated elastomeric spring element (16, 5) is arranged in the space between the pressure sensor (7, 18; 2) and the associated elastomeric spring element (16, 5).

8. A device according to one of claims 4 to 7, characterized in that a summation device (12) is provided, to which the signal of one pressure sensor (7, 18; 2; 10) is supplied as a "+" signal and the signal of the other pressure sensor (18, 7; 2; 10) is supplied as a "-" signal, and which, by summation of these signals, forms a signal distinguishing the resulting axial force in terms of magnitude and direction.

## Revendications

1. Dispositif pour la détermination d'une force axiale qui est transmise par un accouplement à timon au moyen d'un épaulement de transmission (20 ou 17) d'une tige de traction (6, 22) appartenant à l'accouplement à timon, dans une direction (Z ou S) via au moins un élément de ressort en élastomère (5 ou 16), à un véhicule automobile (traverse de cadre 4, éléments de montage 3, 9),
caractérisé en ce que sur l'épaulement de transmission (20 ou 17) de la tige de traction (6, 22), qui est orienté vers l'élément de ressort en élastomère (5 ou 16), est agencé au moins un détecteur de pression (18 ou 7) exposé à la pression provoquée par la force axiale dans l'élément de ressort en élastomère (5 ou 16).

2. Dispositif pour la détermination d'une force axiale qui est transmise par un accouplement à timon au moyen d'un épaulement de transmission (20 ou 17) d'une tige de traction (6, 22) appartenant à l'accouplement à timon, dans une direction (Z ou S) via au moins un élément de ressort en élastomère (5 ou 16), à un véhicule automobile (traverse de cadre 4, éléments de montage 3, 9),
caractérisé en ce que sur l'épaulement de transmission (21 ou 15) du véhicule automobile (traverse de cadre 4, éléments de montage 3, 9), qui est orienté vers l'élément de ressort en élastomère (5 ou 16), est agencé au moins un détecteur de pression (2) exposé à la pression provoquée par la force axiale dans l'élément de ressort en élastomère (5 ou 16).

3. Dispositif pour la détermination d'une force axiale qui est transmise par un accouplement à timon au moyen d'un épaulement de transmission (20 ou 17) d'une tige de traction (6, 22) appartenant à l'accouplement à timon, dans une direction (Z ou S) via au moins un élément de ressort en élastomère (5 ou 16), à un véhicule automobile (traverse de cadre 4, éléments de montage 3, 9),
caractérisé en ce que dans l'élément de ressort en élastomère (5 ou 16) est agencé au moins un détecteur de pression (10) exposé à la pression provoquée par la force axiale dans l'élément de ressort en élastomère (5 ou 16).

4. Dispositif selon l'une quelconque des revendications précédentes, dans lequel une force axiale est transmise par l'accouplement à timon en direction inverse (S ou Z) via au moins un autre élément de ressort en élastomère (16 ou 5), au bâti du véhicule automobile (traverse de cadre 4, éléments de montage 3, 9),
caractérisé en ce que sur un épaulement de transmission (17 ou 20) de la tige de traction (6, 22), qui est orienté vers l'autre élément de ressort en élastomère (16 ou 5), est agencé au moins un détecteur de pression (7 ou 18) exposé à la pression provoquée par la force axiale en direction inverse (S ou Z) dans l'autre élément de ressort en élastomère (16 ou 5).

5. Dispositif selon l'une quelconque des revendications précédentes, dans lequel une force axiale est transmise en direction inverse (Z ou S) par l'accouplement à timon via au moins un autre élément de ressort en élastomère (16 ou 5), au bâti du véhicule automobile (traverse de cadre 4, éléments de montage 3, 9),
caractérisé en ce que sur un épaulement de transmission (15 ou 21) du véhicule automobile (traverse de cadre 4, éléments de montage 3, 9), qui est orienté vers l'autre élément de ressort en élastomère (16 ou 5), est agencé au moins un détecteur de pression (2) exposé à la pression provoquée par la force axiale en direction inverse (S ou Z) dans l'autre élément de ressort en élastomère (16 ou 5).

6. Dispositif selon l'une quelconque des revendications précédentes, dans lequel une force axiale est transmise en direction inverse (S ou Z) par l'accouplement à timon via au moins un autre élément de ressort en élastomère (16 ou 5), au bâti du véhicule automobile (traverse de cadre 4, éléments de montage 3, 9),
caractérisé en ce que dans l'autre élément de ressort en élastomère (16 ou 5) est agencé au moins un détecteur de pression (10) exposé à la pression provoquée par la force axiale en direction inverse (S ou Z) dans l'autre élément de ressort en élastomère (16 ou 5).

7. Dispositif selon l'une quelconque des revendications précédentes,
caractérisé en ce que le détecteur de pression (7 ou 18 ; 2) est agencé en renfoncement dans l'épaulement de transmission associé (17 ou 20 ; 15 ou 21), et en ce que dans l'espace entre le détecteur de pression (7 ou 18; 2) et l'élément de ressort en élastomère associé (16 ou 5) est agencé un transmetteur de pression (8 ou 19) réalisé en un élastomère plus souple par comparaison à l'élément de ressort en élastomère associé (16 ou 5).

8. Dispositif selon l'une quelconque des revendications 4 à 7,
caractérisé en ce qu'il est prévu un dispositif de sommation (12) auquel est envoyé le signal de l'un des détecteurs de pression (7 ou 18 ; 2 ; 10) en tant que signal + et le signal de l'autre détecteur de pression (18 ou 7 ; 2 ; 10) en tant que signal -, et qui forme par sommation de ces signaux un signal qui caractérise la force axiale résultante selon la valeur et la direction.
